# DEMANDE DE BREVET EUROPEEN

(11) **EP 4 317 864 A1**
(43) Date de publication de la demande: **07.02.2024**
(21) Numéro de dépôt: 23186610.4
(22) Date de dépôt: 20.07.2023
(51) Int. Cl.: F25B 45/00, B60H 1/00, F25B 49/00, H04W 8/00, G05B 23/00

(54) **STATION DE RECHARGE DE FLUIDE RÉFRIGÉRANT CONNECTÉE**

(30) Priorité: 03.08.2022 FR 2208048
(71) Demandeur: SNDC, 31860 Labarthe-sur-Leze (FR)
(72) Inventeur: AGNINDE, Séoute Samuel, 31860 LABARTHE SUR LEZE (FR); BAUCHET, Thomas, 31860 LABARTHE SUR LEZE (FR); SANCHEZ, Nicolas, 31860 LABARTHE SUR LEZE (FR)
(74) Mandataire: Argyma

(57) **Abrégé**

L'invention concerne une station (20) de recharge de fluide réfrigérant comprenant un module de gestion (210) configuré pour recevoir, d'un dispositif de contrôle, sur un lien de communication, au moins une requête de commande, ladite au moins une requête de commande comprenant l'identifiant de ladite station (20) et au moins une commande à appliquer à ladite station (20), mettre en oeuvre l'au moins une commande de la requête de commande reçue, ladite commande étant une demande de mise en oeuvre d'une fonction ou une demande d'état de la station (20), et envoyer au dispositif de contrôle une réponse comportant son identifiant et indiquant le résultat de la commande mise en oeuvre.

## Description

### [Domaine technique]

La présente invention se rapporte au domaine de la gestion des circuits de refroidissement par fluide réfrigérant de véhicule et concerne plus particulièrement une station de recharge de fluide réfrigérant, un dispositif de contrôle de stations de recharge de fluide réfrigérant ainsi qu'un système de recharge de fluide réfrigérant et un procédé de contrôle.

### [Etat de la technique antérieure]

De nos jours, la plupart des installations de climatisation fonctionnent avec un fluide réfrigérant. Dans ce type d'installation et de manière connue, il est nécessaire de recycler le fluide après une durée d'utilisation, notamment du fait des pertes en fluide ou des polluants présents à l'intérieur du système (humidité, impuretés, etc.). A cette fin, il est connu de récupérer tout d'abord le fluide présent dans le circuit de refroidissement de l'installation avant de charger de nouveau du fluide en utilisant une station permettant à la fois la récupération, le recyclage et la recharge de fluide réfrigérant.

Dans une solution connue, utilisée notamment dans de nombreux garages automobiles, la station de charge se présente sous la forme d'un chariot mobile sur lequel sont montés, notamment, un réservoir de stockage du fluide réfrigérant, une pompe à vide, un séparateur, un compresseur et une pluralité d'électrovannes reliés par des tuyaux permettant de réaliser un circuit interne de fluide entre une entrée basse pression et une sortie haute pression de la station.

La commande d'une telle station est réalisée par un opérateur à partir d'un clavier de commande comportant plusieurs touches et menus, notamment pour démarrer la charge ou contrôler divers programmes et fonctions. Cette méthode de contrôle peut cependant s'avérer fastidieuse et chronophage, notamment lorsqu'un opérateur doit commander plusieurs stations simultanément car il doit passer de station en station pour les contrôler et lancer les différentes tâches du processus de recharge.

Il existe donc un besoin d'une solution simple et efficace permettant de remédier au moins en partie à ces inconvénients.

### [Exposé de l'invention]

A cette fin, l'invention a tout d'abord pour objet une station de recharge de fluide réfrigérant, notamment pour véhicule, dans laquelle le processus de recharge comporte une série de tâches à réaliser, ladite station étant caractérisée par un identifiant unique et comprenant un module de gestion configuré pour :

- recevoir, d'un dispositif de contrôle, sur un lien de communication, au moins une requête de commande, ladite au moins une requête de commande comprenant l'identifiant de ladite station et au moins une commande à appliquer à ladite station,

- mettre en oeuvre l'au moins une commande de la requête de commande reçue, ladite commande étant une demande de mise en oeuvre d'une fonction ou une demande d'état de la station,

- envoyer au dispositif de contrôle une réponse comportant son identifiant (i.e. l'identifiant de ladite station) et indiquant le résultat de la commande mise en oeuvre.

Par « circuit de refroidissement », on entend aussi bien un circuit de climatisation qu'un circuit de réfrigération. Par « processus de recharge », on entend les étapes permettant notamment le vidage (si nécessaire) du fluide réfrigérant usagé contenu dans le circuit de refroidissement et le remplissage du circuit de refroidissement avec un nouveau fluide réfrigérant, par exemple préalablement (vierge, recyclé ou régénéré). La station de recharge est ainsi configurée pour être reliée à un circuit de refroidissement, notamment d'un dispositif d'air conditionné de véhicule automobile, pour collecter un fluide réfrigérant usagé dans ledit circuit de refroidissement et pour remplir ledit circuit de refroidissement avec un nouveau fluide réfrigérant à travers un processus de recharge comportant une série de tâches.

La commande peut comprendre l'activation de fonctions ou la surveillance de la station, notamment de la recharge. Par exemple, la commande peut concerner une demande de mesures de paramètres d'utilisation de la station, la modification de paramètres ou de valeurs de paramètres, l'activation d'un cycle de recharge entier (i.e. une seule commande pour lancer toutes les tâches), le contrôle tâche par tâche de la station, notamment de la recharge, etc.

La station de recharge selon l'invention est contrôlable à distance par le dispositif de contrôle, qui peut contrôler plusieurs stations de recharge à la fois. Notamment, un opérateur peut commander et surveiller chaque station via le dispositif de contrôle sans être physiquement présent à côté des stations, qui peuvent ainsi se trouver dans des endroits géographiques différents. La station selon l'invention permet ainsi d'éviter à un opérateur de passer sur chaque station pour la commander ou surveiller la recharge. La station selon l'invention peut ainsi être dépourvue de panneau de commande complexe (touches, actuateurs, etc.). La station de recharge selon l'invention offre ainsi une solution simple, fiable, efficace et déportée de commande et de surveillance de plusieurs stations de recharge simultanément et en temps réel.

Avantageusement, ladite station est configurée pour déterminer périodiquement l'état d'avancement du processus de recharge et pour envoyer périodiquement au dispositif de contrôle une réponse comportant son identifiant unique (i.e. l'identifiant unique de ladite station) et indiquant l'état d'avancement du processus de recharge en temps réel.

Par « périodiquement », on entend à des intervalles de temps faibles, par exemple variant de quelques millisecondes à quelques secondes de manière à pouvoir suivre l'état d'avancement de la recharge en temps réel.

De préférence, la station comprend un module de communication connecté avec le module de gestion et configuré pour détecter le dispositif de contrôle et pour se connecter avec ledit dispositif de contrôle sur le lien de communication, de préférence après authentification, afin de communiquer des données de contrôle et d'état d'avancement du processus de recharge.

De préférence encore, la station est configurée pour communiquer avec le dispositif de contrôle sur un lien de communication sans fil.

Dans une forme de réalisation, la station comprend un écran tactile configuré pour permettre à un opérateur de générer au moins une commande de ladite station, le module de gestion étant configuré pour mettre en oeuvre la commande générée.

Un écran de commande tactile est simple et efficace pour commander une machine telle qu'une station de recharge. En outre, la présente d'un tel écran tactile de commande directement intégré à la station de recharge permet à un opérateur de pouvoir contrôler la machine, par exemple pour la paramétrer ou dans le cas où le lien de communication entre la station et le dispositif de contrôle ne peut pas être établi ou lorsque le dispositif de contrôle est défectueux.

L'invention comprend également un dispositif de contrôle d'au moins une station de recharge de fluide réfrigérant via un lien de communication, de préférence sans fil, ledit dispositif de contrôle étant configuré pour :
- établir une communication avec au moins une station de recharge de fluide réfrigérant telle que présentée ci-avant, de préférence avec plusieurs stations simultanément,
- générer au moins une requête de commande, ladite au moins une requête de commande comprenant l'identifiant de ladite au moins une station et au moins une commande à appliquer à ladite station,
- envoyer l'au moins une requête de commande générée à l'au moins une station de recharge,
- recevoir de l'au moins une station au moins une réponse à l'au moins une requête de commande, ladite au moins une réponse indiquant le résultat de la commande mise en oeuvre,
- afficher le résultat de la commande mise en oeuvre.

Le dispositif de contrôle selon l'invention permet de surveiller et de contrôler l'avancement de la recharge d'une ou plusieurs stations à distance et de manière centralisée. Ainsi, il n'est plus nécessaire d'avoir un opérateur devant la station ou devant plusieurs stations disposées côte à côte ou bien plusieurs opérateurs répartis sur plusieurs sites pour contrôler une ou plusieurs stations localement. L'ensemble de la surveillance et du contrôle des stations est réalisé à distance et de manière centralisée par un unique opérateur. Cela permet notamment de pouvoir prioriser les tâches de contrôle entre les stations en fonction de l'état d'avancement de chacune desdites stations lorsque plusieurs stations sont commandées et/ou surveillées simultanément. Cela permet aussi d'effectuer à distance le paramétrage de chaque station.

Avantageusement, le dispositif de contrôle est configuré pour recevoir périodiquement de l'au moins une station au moins une réponse à l'au moins une requête de commande, ladite au moins une réponse indiquant l'état d'avancement de la recharge de fluide réfrigérant par ladite au moins une station, et pour afficher l'état d'avancement de la recharge de fluide réfrigérant par ladite au moins une station en temps réel à partir de l'au moins une réponse reçue.

Selon un aspect de l'invention, le dispositif de contrôle est configuré pour, chaque station étant caractérisée par un identifiant unique, par exemple son numéro de série, recevoir ledit identifiant et se connecter à la station associée sur le lien de communication, de préférence par authentification.

De préférence, l'identifiant de chaque station étant un code à réponse rapide apposé sur ladite station, ledit dispositif de contrôle étant configuré pour lire chaque code à réponse rapide apposé sur une station afin de le recevoir et authentifier ladite station à partir dudit code lu.

Dans une forme de réalisation, le dispositif de contrôle est configuré pour, suite à la réception de plusieurs réponses reçues de plusieurs stations différentes et indiquant l'état d'avancement du processus de recharge de fluide réfrigérant de chaque station, prioriser les tâches à réaliser entre plusieurs stations de recharge de fluide réfrigérant, commander la réalisation des tâches selon leur ordre de priorité et afficher la liste des tâches priorisées.

De manière avantageuse, le dispositif de contrôle est configuré pour recevoir de chaque station de recharge l'historique de toutes les interventions (opérations et tâches du processus de recharge). Cet historique peut être requis par le dispositif de contrôle auprès d'une station donnée via une requête de commande.

Avantageusement encore, le dispositif de contrôle est configuré pour recevoir de chaque station de recharge des données de bilan du fluide consommé par ladite station, par exemple suite à une requête de commande envoyée par ledit dispositif de contrôle ou bien automatiquement (par exemple envoyée périodiquement par la station).

Selon un aspect de l'invention, le bilan du fluide comporte le volume de fluide vierge injecté par la station dans les circuits de refroidissement, le volume de fluide régénéré (retraité à l'extérieur de la station) injecté par la station dans les circuits de refroidissement et le volume de fluide récupéré et recyclé par la station. Ce bilan peut être global, c'est-à-dire réalisé sur le temps de vie global de la station ou bien sur une période de durée prédéterminée, par exemple un jour, une semaine, un mois, une année, etc.

Avantageusement, le dispositif de contrôle est configuré pour calculer le bilan des fluides à partir du volume de fluide vierge injecté par la station dans les circuits de refroidissement, du volume de fluide régénéré (retraité à l'extérieur de la station) injecté par la station dans les circuits de refroidissement et du volume de fluide récupéré et recyclé par la station.

Le bilan des fluides peut être réalisé à partir de données de l'historique des interventions reçu.

Alternativement, chaque station peut être configurée pour calculer le bilan des fluides à partir du volume de fluide vierge injecté par ladite station dans les circuits de refroidissement, du volume de fluide régénéré (retraité à l'extérieur de la station) injecté par ladite station dans les circuits de refroidissement et du volume de fluide récupéré et recyclé par ladite station, et envoyer ledit bilan au dispositif de contrôle.

De manière avantageuse, le dispositif de contrôle est configuré pour envoyer les données de bilan de fluide ou le bilan de fluide de chaque station à un serveur, par exemple centralisé, de manière à pouvoir réaliser une supervision des stations via un réseau de communication, par exemple Internet, et une interface utilisateur pour une interaction continue et guidée avec les stations via le dispositif de contrôle, permettant ainsi une gestion à distance des stations.

L'invention comprend également un système de recharge de fluide réfrigérant, ledit système comprenant un dispositif de contrôle tel que présenté ci-avant et au moins une station telle que présentée ci-avant.

De préférence, le système comprend une pluralité de stations de recharge, chacune telle que présentée ci-avant, pouvant être contrôlée à distance par un même dispositif de contrôle tel que présenté ci-avant.

Dans une forme de réalisation, le système comprend un serveur relié au dispositif de contrôle via un réseau de communication, ledit serveur étant configuré pour recevoir et afficher les données de bilan de fluide des stations reçues du dispositif de contrôle via ledit réseau de communication, afin d'effectuer la supervision de l'ensemble des stations à distance par un opérateur.

L'invention comprend également un procédé de recharge d'un fluide réfrigérant par au moins une station de recharge telle que présentée précédemment, ladite au moins une station étant contrôlée à distance par un dispositif de contrôle tel que présenté précédemment, ledit procédé comprenant les étapes de :
- établissement d'un lien de communication entre le dispositif de contrôle et l'au moins une station,
- génération par le dispositif de contrôle d'au moins une requête de commande, ladite au moins une requête de commande comprenant l'identifiant d'une station et au moins une commande à appliquer à ladite station,
- envoi, par le dispositif de contrôle, à la station, sur le lien de communication établi, de ladite au moins une requête de commande générée,
- réception par la station, via le lien de communication, de l'au moins une requête de commande envoyée par le dispositif de contrôle,
- mise en oeuvre par la station de l'au moins une commande de la requête de commande reçue, ladite commande étant une demande de mise en oeuvre d'une fonction ou une demande d'état de la station,
- envoi par la station au dispositif de contrôle d'au moins une réponse comportant l'identifiant de la station et indiquant le résultat de la commande mise en oeuvre,
- réception par le dispositif de contrôle de l'au moins une réponse,
- affichage du résultat de la commande mise en oeuvre.

L'invention concerne également un procédé de recharge à distance d'un fluide réfrigérant par une station de recharge telle que présentée ci-avant, ledit procédé, mis en oeuvre par ladite station, comprenant les étapes de :
- réception, d'un dispositif de contrôle, sur un lien de communication, d'au moins une requête de commande, ladite au moins une requête de commande comprenant l'identifiant de ladite station et au moins une commande à appliquer à ladite station,
- mise en oeuvre de l'au moins une commande de la requête de commande reçue, ladite commande étant une demande de mise en oeuvre d'une fonction ou une demande d'état de la station,
- envoi au dispositif de contrôle d'une réponse comportant son identifiant (i.e. l'identifiant de ladite station) et indiquant le résultat de la commande mise en oeuvre.

Dans un mode de réalisation, le procédé mis en oeuvre par la station comprend une étape de détermination périodique de l'état d'avancement du processus de recharge en temps réel, et une étape d'envoi au dispositif de contrôle d'au moins une réponse à l'au moins une requête de commande, ladite réponse indiquant l'état d'avancement du processus de recharge.

Dans un mode de réalisation, la station comprenant un écran tactile configuré pour permettre à un opérateur de générer au moins une commande de ladite station, le procédé comprend une étape de commande de la station à partir de la commande générée.

Dans un mode de réalisation, la station comprenant un module de communication tel que présenté ci-avant, le procédé comprend la détection par ledit module de communication du dispositif de contrôle et la connexion au dispositif de contrôle sur le lien de communication, de préférence par authentification, afin de communiquer les requêtes de commande et les réponses.

De préférence, la communication entre la station et le dispositif de contrôle est réalisée sur un lien de communication sans fil, par exemple de type Wifi^{®} ou Bluetooth^{®} ou 3G/4G/5G.

L'invention concerne également un produit programme d'ordinateur caractérisé en ce qu'il comporte un ensemble d'instructions de code de programme qui, lorsqu'elles sont exécutées par un ou plusieurs processeurs, configurent le ou les processeurs pour mettre en oeuvre un procédé mis en oeuvre par une station de recharge telle que présentée ci-avant.

L'invention concerne également un procédé de contrôle à distance de la recharge d'un fluide réfrigérant par au moins une station de recharge de fluide réfrigérant telle que présentée ci-avant, ledit procédé, mis en oeuvre par un dispositif de contrôle tel que présenté ci-avant, comprenant les étapes de :
- établissement d'une communication avec au moins une station de recharge de fluide réfrigérant telle que présentée ci-avant, de préférence avec plusieurs stations simultanément,
- génération d'au moins une requête de commande, ladite au moins une requête de commande comprenant l'identifiant de ladite au moins une station et au moins une commande à appliquer à ladite station,
- envoi de l'au moins une requête de commande générée à l'au moins une station de recharge,
- réception, de l'au moins une station, d'au moins une réponse à l'au moins une requête de commande, ladite au moins une réponse indiquant le résultat de la commande mise en oeuvre,
- affichage, de préférence en temps réel, du résultat de la commande mise en oeuvre.

Dans une forme de réalisation, l'au moins une réponse indique l'état d'avancement de la recharge de fluide réfrigérant par l'au moins une station et le procédé comprend une étape d'affichage de l'état d'avancement du processus de recharge de fluide réfrigérant par ladite au moins une station à partir de l'au moins une réponse reçue.

De préférence, le procédé comprend en outre les étapes de génération d'au moins une requête de commande pour commander l'au moins une station et d'envoi à l'au moins une station, sur le lien de communication sans fil, de l'au moins une requête de commande générée.

Avantageusement, le procédé comprend la réception par le dispositif de contrôle de données de bilan de fluide réfrigérant envoyées par chaque station.

Dans un mode de réalisation, le dispositif de contrôle calcule le bilan des fluides à partir du volume de fluide vierge injecté par la station dans les circuits de refroidissement, du volume de fluide régénéré (retraité à l'extérieur de la station) injecté par la station dans les circuits de refroidissement et du fluide récupéré et recyclé par la station et envoie ce bilan à un serveur via un réseau de communication.

Dans un autre mode de réalisation, le dispositif de contrôle envoie les données de bilan des fluides (volume de fluide vierge injecté par la station dans les circuits de refroidissement, volume de fluide régénéré (retraité à l'extérieur de la station) injecté par la station dans les circuits de refroidissement et volume de fluide récupéré et recyclé par la station) à un serveur via un réseau de communication et ledit serveur calcule le bilan des fluides pour chaque station.

L'invention concerne également un produit programme d'ordinateur caractérisé en ce qu'il comporte un ensemble d'instructions de code de programme qui, lorsqu'elles sont exécutées par un ou plusieurs processeurs, configurent le ou les processeurs pour mettre en oeuvre un procédé mis en oeuvre par le dispositif de contrôle tel que présenté ci-avant.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig 1] La figure 1 illustre schématiquement une forme de réalisation du système selon l'invention.
[Fig 2] La figure 2 illustre schématiquement une forme de réalisation de la station de recharge selon l'invention.
[Fig 3] La figure 3 illustre schématiquement un mode de réalisation du procédé selon l'invention.

### [Description des modes de réalisation]

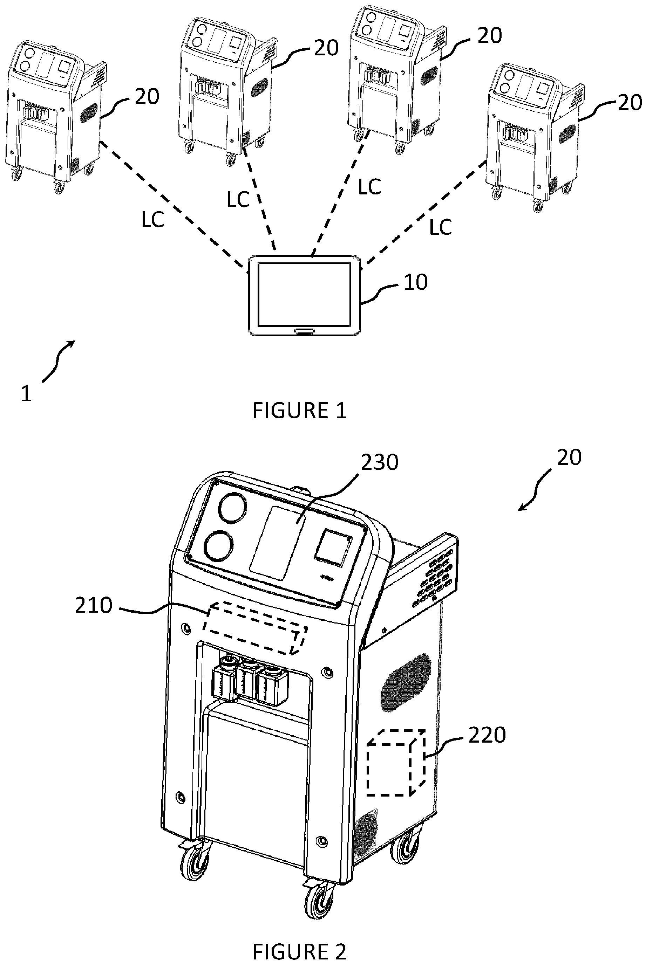

On a représenté à la figure 1 un exemple de système 1 selon l'invention.

Dans cet exemple, le système 1 comprend un dispositif de contrôle 10 et une pluralité de stations 20 de recharge de fluide réfrigérant, chaque station 20 étant caractérisée par un identifiant unique.

Le dispositif de contrôle 10 et les stations 20 sont configurés pour se connecter et communiquer sur un lien de communication LC dédié. En d'autres termes, chaque station 20 est connectée au dispositif de contrôle 10 sur un lien de communication LC dédié.

De préférence, le lien de communication LC est un lien de communication LC sans fil, par exemple de type Wifi, Bluetooth^{®} ou 3G/4G/5G, etc. En variante ou en complément, tout ou partie des liens de communication LC pourraient être filaires et/ou sans fil.

Avantageusement, le dispositif de contrôle 10 est configuré pour se connecter et communiquer avec plusieurs stations 20 simultanément.

### Dispositif de contrôle 10

Le dispositif de contrôle 10 est configuré pour recevoir l'identifiant de chaque station 20. Par exemple, le dispositif de contrôle 10 peut être configuré pour lire l'identifiant de chaque station 20 sous la forme d'un code à réponse rapide (QR code).

Le dispositif de contrôle 10 est configuré pour générer des requêtes de commande permettant de contrôler chacune des stations 20.

Pour une station 20 donnée, chaque requête de commande comprend l'identifiant de ladite station 20 destinataire et au moins une commande à appliquer à ladite station 20.

La commande peut être une demande de mise en oeuvre d'une fonction, notamment d'une tâche spécifique, ou bien une demande d'état de la station 20.

Une demande de mise en oeuvre d'une fonction peut être la modification des paramètres d'utilisation de la station 20, la demande de mise en oeuvre d'une ou plusieurs tâches du processus de recharge de fluide réfrigérant de la station 20, etc.

Une demande d'état de la station 20 peut notamment comprendre l'obtention de mesures de capteurs de la station 20, la visualisation des paramètres d'utilisation de la station 20, le suivi des étapes du processus de recharge en temps réel de la station 20 (état d'avancement de la recharge), etc.

Les capteurs de la station 20 peuvent par exemple être des capteurs permettant de peser le réfrigérant contenu dans la bouteille, l'huile et le traceur dans les flacons et de quantifier la pression dans la bouteille mais aussi au niveau de la nourrice contrôlant les diverses électrovannes de la station de recharge.

Les paramètres d'utilisation de la station 20 peuvent par exemple être le temps d'analyse des pressions, la durée de tirage au vide et le temps de contrôle d'étanchéité, la quantité de charge par défaut, la quantité d'huile à injecter par défaut.

Les étapes du processus de recharge peuvent par exemple être la récupération du réfrigérant contenu dans le circuit de refroidissement, le tirage au vide du circuit suivi d'un contrôle d'étanchéité, la programmation de la quantité d'huile à injecter et de la quantité de réfrigérant à charger.

Le dispositif de contrôle 10 est configuré pour envoyer à chaque station 20, sur le lien de communication LC sans fil sur lequel ladite station 20 et le dispositif de contrôle 10 sont connectés, la ou les requêtes de commande générées pour ladite station 20.

Le dispositif de contrôle 10 est configuré pour recevoir de chaque station 20 une réponse pour chaque requête de commande envoyée. Chaque réponse reçue comprend une ou plusieurs valeurs requises dans la requête de commande ou de résultat de la commande appliquée par la station 20 (mesures des capteurs, valeurs des paramètres d'utilisation, confirmation de modification des valeurs des paramètres d'utilisation, état d'avancement du processus de recharge (étape de la recharge et/ou description de l'état de la recharge), etc.).

Le dispositif de contrôle 10 est configuré pour afficher le résultat des commandes mises en oeuvre par les stations 20, notamment les informations relatives à la commande de la station 20 obtenues dans chaque réponse reçue, en particulier les tâches et résultats des tâches de recharge.

Le dispositif de contrôle 10 est configuré pour, suite à la réception de plusieurs réponses reçues de plusieurs stations 20 indiquant l'état de chaque station 20, notamment de la recharge de fluide réfrigérant de chaque station 20, prioriser les tâches à réaliser entre plusieurs stations 20 et, éventuellement, commander les stations 20 dans l'ordre de priorité des tâches et/ou afficher la liste des tâches priorisées.

Le dispositif de contrôle 10 comprend un sous-module de saisie, de préférence de type écran tactile, configuré pour permettre à un opérateur de configurer l'au moins une requête de commande à générer. Par exemple, le dispositif de contrôle 10 peut être mis en oeuvre par une tablette tactile, un smartphone ou un ordinateur, de préférence portable, indépendamment de son système d'exploitation.

Le dispositif de contrôle 10 est configuré pour recevoir périodiquement de chacune des stations 20 une réponse indiquant l'état d'avancement de la recharge de fluide réfrigérant par ladite station 20 et pour afficher l'état d'avancement de la recharge de fluide réfrigérant par ladite station 20 en temps réel.

Le dispositif de contrôle 10 est configuré pour, suite à la réception de plusieurs réponses reçues de plusieurs stations 20 différentes et indiquant l'état d'avancement du processus de recharge de fluide réfrigérant de chaque station 20, prioriser les tâches à réaliser entre plusieurs stations 20 de recharge de fluide réfrigérant, commander la réalisation des tâches selon leur ordre de priorité et afficher la liste des tâches priorisées.

Le dispositif de contrôle 10 comprend un processeur apte à mettre en oeuvre un ensemble d'instructions permettant de réaliser ces fonctions.

### Station 20 de recharge de fluide réfrigérant

La station 20 est caractérisée par un identifiant et comprend, en référence à la figure 2, un module de gestion 210, un module de communication 220 et un écran tactile 230.

L'identifiant de la station 20 permet au dispositif de contrôle 10 de se connecter avec la station 20 pour pouvoir la contrôler. Dans une forme de réalisation, l'identifiant de la station 20 est codé dans un code à réponse rapide (Quick Response code), plus communément appelé QR code, et le dispositif de contrôle 10 est configuré pour lire ledit QR code afin de déterminer l'identifiant de la station 20.

### Module de gestion 210

Le module de gestion 210 est configuré pour recevoir du dispositif de contrôle 10, sur un lien de communication LC sans fil des requêtes de commande permettant de commander la station et notamment de piloter la recharge de fluide réfrigérant.

Chaque requête de commande comprend l'identifiant de la station et au moins une commande à appliquer à ladite station. La commande à appliquer est soit une demande de mise en oeuvre d'une fonction, soit une demande d'état de la station.

Le module de gestion 210 est configuré pour mettre en oeuvre les commandes insérées dans chaque requête de commande reçue et pour envoyer au dispositif de contrôle 10 pour chaque requête de commande reçue, via le module de communication 220, une réponse comportant l'identifiant de la station 20 et indiquant le résultat de la commande mise en oeuvre.

De préférence, le module de gestion 210 est configuré pour déterminer l'état d'avancement d'une recharge en fluide réfrigérant en cours et pour envoyer au dispositif de contrôle 10 une réponse indiquant l'état d'avancement de ladite recharge.

### Module de communication 220

Le module de communication 220 est connecté au module de gestion 210, par exemple de manière filaire ou sans fil.

Le module de communication 220 est configuré pour scanner l'environnement de la station 20 sur une interface de communication sans fil, par exemple Wifi ou Bluetooth^{®} ou 3G/4G/5G, afin de détecter les dispositifs environnants pouvant dialoguer avec la station 20 via ladite interface.

Le module de communication 220 est configuré pour détecter le dispositif de contrôle 10 et pour se connecter avec ledit dispositif de contrôle 10 sur le lien de communication LC, de préférence après authentification, afin de communiquer des données de contrôle de la station 20 et d'état d'avancement du processus de recharge de la station 20.

Chaque station 20 de recharge de fluide réfrigérant comprend un processeur apte à mettre en oeuvre un ensemble d'instructions permettant de réaliser les fonctions susmentionnées.

### Ecran tactile 230

Dans l'exemple illustré, la station 20 comprend un écran tactile 230 configuré pour permettre à un opérateur de générer des commandes pour contrôler la station 20. Dans ce cas, le module de gestion 210 est configuré pour mettre en oeuvre la commande générée via ledit écran tactile 230.

### Exemple de mise en oeuvre

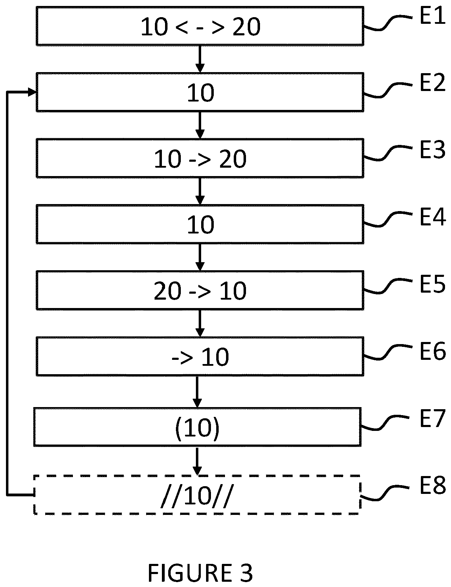

Un exemple de mise en oeuvre du système 1 selon l'invention va maintenant être décrit en référence à la figure 3. Dans l'exemple ci-après, chaque station 20 est utilisée pour procéder à la recharge en fluide réfrigérant d'un circuit de refroidissement distinct.

Tout d'abord, il est nécessaire de connecter chaque station 20 au dispositif de contrôle 10 dans une étape E1. Ainsi, un lien de communication LC distinct est établi entre le dispositif de contrôle 10 et le module de communication 220 de chaque station 20. Dans ce but, le dispositif de contrôle 10 lit le code à réponse rapide (QR code) de chaque station et en extrait l'identifiant de chaque station 20 puis authentifie la station 20. Dans le même temps, chaque station 20 authentifie le dispositif de contrôle 10 de sorte à se connecter sur un lien de communication LC sans fil.

Ensuite, dans une étape E2, le dispositif de contrôle 10 génère des requêtes de commande pour chacune des stations 20 en incluant l'identifiant de la station 20 concernée puis envoie lesdites requêtes de commande aux stations 20 concernées dans une étape E3 afin de pouvoir les commander chacune indépendamment à distance.

Dans une étape E4, chaque station 20 reçoit la ou les requêtes de commande qui lui sont destinées puis met en oeuvre la ou les commandes incluses dans la ou les requêtes de commande reçues. Par exemple, le dispositif de contrôle 10 peut requérir les valeurs de certains capteurs d'une station 20, commander le lancement de la recharge d'une autre station et demander l'état d'avancement (étape) d'une recharge en cours d'une autre station.

Ensuite, dans une étape E5, chaque station 20 envoie au dispositif de contrôle 10 une réponse pour chaque requête de commande reçue. Chaque réponse comporte l'identifiant de la station 20 et indique le résultat de la commande mise en oeuvre (par exemple, les valeurs des mesures des capteurs, la confirmation de lancement d'une recharge, l'étape à laquelle se trouve une recharge en cours, etc.).

Les réponses envoyées par les stations 20 sont reçues par le dispositif de contrôle 10 dans une étape E6 puis le dispositif de contrôle 10 affiche les résultats des commandes mises en oeuvre par les stations 20 dans une étape E7.

Avantageusement, dans une étape E8, le dispositif de contrôle 10 priorise les tâches de recharge en cours des différentes stations 20 puis commande les stations 20 dans l'ordre de priorité en retournant à l'étape E2 afin d'optimiser l'ensemble des séquences de recharge.

Ainsi, l'opérateur peut suivre en temps réel à distance (selon la portée du lien de communication LC sans fil le cas échéant) sur une tablette, un ordinateur et/ou un smartphone le niveau des capteurs, visualiser et modifier les paramètres utilisateurs de la machine, et plus important suivre les interventions en temps réel, ce qui entraine un gain énorme de temps et d'efficacité.

## Revendications

1. Station (20) de recharge de fluide réfrigérant, notamment pour véhicule, dans laquelle le processus de recharge comporte une série de tâches à réaliser, ladite station (20) étant **caractérisée par** un identifiant unique et comprenant un module de gestion (210) configuré pour :
- recevoir, d'un dispositif de contrôle (10), sur un lien de communication (LC), au moins une requête de commande, ladite au moins une requête de commande comprenant l'identifiant de ladite station (20) et au moins une commande à appliquer à ladite station (20),
- mettre en oeuvre l'au moins une commande de la requête de commande reçue, ladite commande étant une demande de mise en oeuvre d'une fonction ou une demande d'état de la station (20),
- envoyer au dispositif de contrôle (10) une réponse comportant l'identifiant de ladite station (20) et indiquant le résultat de la commande mise en oeuvre.

2. Station (20) selon la revendication 1, ladite station (20) étant configurée pour déterminer périodiquement l'état d'avancement du processus de recharge et pour envoyer périodiquement au dispositif de contrôle (10) une réponse comportant l'identifiant unique de ladite station (20) et indiquant l'état d'avancement du processus de recharge en temps réel.

3. Station (20) selon l'une quelconque des revendications précédentes, ladite station (20) comprenant un module de communication (220) connecté avec le module de gestion (210) et configuré pour détecter le dispositif de contrôle (10) et pour se connecter avec ledit dispositif de contrôle (10) sur le lien de communication (LC), de préférence après authentification, afin de communiquer des données de contrôle et d'état d'avancement du processus de recharge.

4. Station (20) selon l'une quelconque des revendications précédentes, ladite station (20) étant configurée pour communiquer avec le dispositif de contrôle (10) sur un lien de communication (LC) sans fil.

5. Station (20) selon l'une quelconque des revendications précédentes, ladite station (20) comprenant un écran tactile (230) configuré pour permettre à un opérateur de générer au moins une commande de ladite station (20), le module de gestion (210) étant configuré pour mettre en oeuvre la commande générée.

6. Dispositif de contrôle (10) d'au moins une station (20) de recharge de fluide réfrigérant via un lien de communication (LC), de préférence sans fil, ledit dispositif de contrôle (10) étant configuré pour :
- établir une communication avec au moins une station de recharge (20) de fluide réfrigérant, de préférence avec plusieurs stations (20) simultanément,
- générer au moins une requête de commande, ladite au moins une requête de commande comprenant l'identifiant de ladite au moins une station (20) et au moins une commande à appliquer à ladite station (20),
- envoyer l'au moins une requête de commande générée à l'au moins une station (20) de recharge,
- recevoir de l'au moins une station (20) au moins une réponse à l'au moins une requête de commande, ladite au moins une réponse indiquant le résultat de la commande mise en oeuvre,
- afficher le résultat de la commande mise en oeuvre.

7. Dispositif de contrôle (10) selon la revendication précédente, ledit dispositif de contrôle (10) étant configuré pour recevoir périodiquement de l'au moins une station (20) au moins une réponse à l'au moins une requête de commande, ladite au moins une réponse indiquant l'état d'avancement de la recharge de fluide réfrigérant par ladite au moins une station (20), et pour afficher l'état d'avancement de la recharge de fluide réfrigérant par ladite au moins une station (20) en temps réel à partir de l'au moins une réponse reçue.

8. Dispositif de contrôle (10) selon l'une quelconque des revendications 6 ou 7, ledit dispositif de contrôle étant configuré pour, chaque station étant **caractérisée par** un identifiant unique, par exemple son numéro de série, recevoir ledit identifiant et se connecter à la station associée sur le lien de communication, de préférence par authentification.

9. Dispositif de contrôle (10) selon l'une quelconque des revendications 6 à 8, l'identifiant de chaque station étant un code à réponse rapide apposé sur ladite station, ledit dispositif de contrôle étant configuré pour lire chaque code à réponse rapide apposé sur une station afin de le recevoir et authentifier ladite station à partir dudit code lu.

10. Dispositif de contrôle (10) selon l'une quelconque des revendications 6 à 9, ledit dispositif de contrôle (10) étant configuré pour, suite à la réception de plusieurs réponses reçues de plusieurs stations (20) différentes et indiquant l'état d'avancement du processus de recharge de fluide réfrigérant de chaque station (20), prioriser les tâches à réaliser entre plusieurs stations (20) de recharge de fluide réfrigérant, commander la réalisation des tâches selon leur ordre de priorité et afficher la liste des tâches priorisées.

11. Dispositif de contrôle (10) selon l'une quelconque des revendications 6 à 10, ledit dispositif de contrôle étant configuré pour recevoir de chaque station de recharge des données de bilan du fluide consommé par ladite station.

12. Dispositif de contrôle (10) selon la revendication précédente, dans lequel le bilan du fluide comporte le volume de fluide vierge injecté par la station dans les circuits de refroidissement, le volume de fluide régénéré injecté par la station dans les circuits de refroidissement et le volume de fluide récupéré et recyclé par la station.

13. Dispositif de contrôle (10) selon l'une quelconque des revendications 11 ou 12, ledit dispositif de contrôle étant configuré pour calculer le bilan des fluides à partir du volume de fluide vierge injecté par la station dans les circuits de refroidissement, du volume de fluide régénéré injecté par la station dans les circuits de refroidissement et du volume de fluide récupéré et recyclé par la station.

14. Système (1) de recharge de fluide réfrigérant, ledit système comprenant un dispositif de contrôle (10) selon l'une quelconque des revendications 6 à 13 et au moins une station (20) selon l'une quelconque des revendications 1 à 5.

15. Procédé de contrôle d'au moins une station (20) de recharge selon l'une quelconque des revendications 1 à 5, ladite au moins une station (20) étant contrôlée à distance par un dispositif de contrôle (10) selon l'une des revendications 6 à 13, ledit procédé comprenant les étapes de :
- établissement d'un lien de communication (LC) entre le dispositif de contrôle (10) et l'au moins une station (20),
- génération par le dispositif de contrôle (10) d'au moins une requête de commande, ladite au moins une requête de commande comprenant l'identifiant d'au moins une station (20) et au moins une commande à appliquer à ladite station,
- envoi, par le dispositif de contrôle (10), à la station (20), sur le lien de communication (LC) établi, de ladite au moins une requête de commande générée,
- réception par la station (20), via le lien de communication (LC), de l'au moins une requête de commande envoyée par le dispositif de contrôle (10),
- mise en oeuvre par la station de l'au moins une commande de la requête de commande reçue, ladite commande étant une demande de mise en oeuvre d'une fonction ou une demande d'état de la station (20),
- envoi, par la station (20), au dispositif de contrôle (10) d'au moins une réponse comportant l'identifiant de ladite station (20) et indiquant le résultat de la commande mise en oeuvre,
- réception par le dispositif de contrôle (10) de l'au moins une réponse,
- affichage du résultat de la commande mise en oeuvre.
